(19) Europäisches Patentamt / European Patent Office / Office européen des brevets

(11) **EP 3 611 397 B1**

(12) **EUROPÄISCHE PATENTSCHRIFT**

(45) Veröffentlichungstag und Bekanntmachung des Hinweises auf die Patenterteilung:
**22.02.2023 Patentblatt 2023/08**

(21) Anmeldenummer: **18188781.1**

(22) Anmeldetag: **13.08.2018**

(51) Internationale Patentklassifikation (IPC):
*F16D 66/02* *(2006.01)*

(52) Gemeinsame Patentklassifikation (CPC):
**F16D 66/026;** F16D 2066/005; F16D 2066/006

(54) **METHODE ZUR KRAFTSENSIERUNG**

METHOD FOR FORCE SENSING

PROCÉDÉ DE DÉTECTION DE FORCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2020 Patentblatt 2020/08**

(73) Patentinhaber: **ZF CV Systems Europe BV**
**1170 Brussels (BE)**

(72) Erfinder:
• **Beier, Peter**
**31515 Wunstorf (DE)**
• **Henning, Paul**
**68723 Schwetzingen (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
EP-A1- 0 391 047    EP-A1- 1 762 745
WO-A1-2017/137140    DE-A1-102015 013 240
US-A1- 2011 246 039

**Beschreibung**

Die vorliegende Erfindung betrifft ein Verfahren zur Überwachung einer Bremse eines Kraftfahrzeugs, insbesondere eines Nutzkraftfahrzeugs. Die Erfindung betrifft ferner ein Steuergerät sowie ein Fahrzeugsystem mit selbigem. Verfahren zur Überwachung einer Bremse sind in der Kraftfahrzeug-, insbesondere Nutzfahrzeugbranche allgemein bekannt. Ziel ist allgemein, mittels der Überwachung des Lüftspiels, der Verformung der Bremse und der Zuspannkraft festzustellen, ob die Bremse wie vorgesehen arbeitet. Die Überwachung der Bremse in dem Kraftfahrzeug erfolgt dabei durch verschiedene Sensoren, wie beispielsweise Verschleißsensoren an der Bremse, welche ein Wegsignal der Bremse bereitstellen, oder Kraftsensoren welche die Betätigungskraft oder die Zuspannkraft der Bremse überwachen. Eine wichtige praktikable Größe zur Steuerung oder Regelung einer Bremse ist die Zuspannkraft, unabhängig der Energieform die zur Betätigung verwendet wird.

Zur Ermittlung der Zuspannkraft müssen Kraftsensoren in den Zuspannkraftfluss einer Bremse eingebaut werden. Dies bedingt einen hohen Kosten- und Wartungsaufwand.

Dokument US2011246039 A1 offenbart ein Verfahren zur Bestimmung einer Bremskraft in einer elektromechanischen Bremse.

Vor diesem Hintergrund lag der vorliegenden Erfindung die Aufgabe zugrunde, eine Möglichkeit zur Überwachung einer Bremse anzugeben, welche bei möglichst minimalem apparativen Aufwand, insbesondere möglichst minimalem Kosten- und Wartungsaufwand, eine zuverlässige Ermittlung der Zuspannkraft der Bremse ermöglicht.

Die Erfindung löst die zugrundeliegende Aufgabe bei einem Verfahren der eingangs bezeichneten Art mit den Verfahrensschritten:

- Auslesen von Wegsignalen eines an der Bremse angeordneten Verschleißsensors,
- Bereitstellen eines der Bremse zugeordneten vordefinierten Steifigkeitskennfeldes, in dem zustandsabhängige Steifigkeitswerte hinterlegt sind, und
- Berechnen einer Zuspannkraft $F_{Ist}$ als Funktion der Wegsignale und des vordefinierten Steifigkeitskennfeldes.

Die Erfindung betrifft sowohl Scheibenbremsen als auch Trommelbremsen, wobei bei einer Scheibenbremse der zum Bremsbelag korrespondierende Gegenpart die Bremsscheibe ist, und bei einer Trommelbremse die Bremstrommel.

Der Verschleißsensor misst in allgemein bekannter Art beispielsweise den Hubweg eines mit dem Aktuator gekoppelten Druckstempels, welcher auf die Bremsbeläge der Bremse wirkt. Der Verschleißsensor und/oder ein weiterer Wegsensor erfasst einen Axialweg eines Stößels des Aktuators bzw. erfasst ein Inkrementalgeber eine Winkelbewegung eines entsprechend angelenkten mit dem Aktuator gekoppelten Bauteils im Kraftstrang der Bremsanlage.

Die Erfindung macht sich die Erkenntnis zu Nutze, dass der Verschleißsensor bereits ein hochsensibles Messinstrument darstellt, welches über die reine Messung einer Betätigungsstrecke hinaus anhand des zeitlichen Signalverlaufs analysiert werden kann. Es ist erkannt worden, dass eine Veränderung der mechanischen Struktur, wie sie insbesondere durch das Inkontaktbringen zwischen Bremsbelag und Gegenpart stattfindet, sich unmittelbar auf den Signalverlauf des Ausgangssignals des Verschleißsensors auswirkt. Die Zuspannkraft lässt sich anhand der durch den Verschleißsensor bereitgestellten Wegsignale und des vordefinierten Steifigkeitskennfeldes berechnen. Die in dem Steifigkeitskennfeld hinterlegten Steifigkeitswerte sind repräsentativ für die Steifigkeit der Bremse und zustandsabhängig, so dass das Bewegungsprofil des Fahrzeugs und Umgebungseinflüsse bei der Berechnung der Zuspannkraft berücksichtigt werden. Durch den Verzicht auf einen separaten Kraftsensor zur Überwachung der Zuspannkraft wird der Wartungsaufwand der Bremse reduziert.

Ähnlich der Bestimmung eines Steifigkeitskennfeldes für die Zuspannkraft wird in einer bevorzugten Ausführungsform ein Steifigkeitskennfeld für die Betätigungskraft über den Betätigungsweg für den Aktuator ermittelt bzw. vorab bereitgestellt. Es kann dann die Bestimmung der Betätigungskraft mittels einer Messung des Betätigungsweges des Stößels oder Drehwinkels des Aktuators und anhand des vordefinierten Steifigkeitskennfeldes erfolgen.

Gemäß einer bevorzugten Weiterbildung der Erfindung wird die Zuspannkraft jeweils als Produkt eines der in dem Steifigkeitskennfeld hinterlegten Steifigkeitswerte und eines zugeordneten Wertes der Wegsignale bereitgestellt. Somit kann die Zuspannkraft in einfacher Weise durch das Produkt, der in dem Steifigkeitskennfeld hinterlegten Steifigkeitswerte und der Wegsignale, berechnet werden.

Weiter bevorzugt sind die Steifigkeitswerte in Abhängigkeit mehrerer Zustandsparameter hinterlegt und die Parameter eines, mehrere oder sämtliche der folgenden umfassen: Temperatur, Verschleiß, Bremsentyp, Bremsenbelagstyp.

Thermische Einflüsse der Bremse wirken sich auf deren Festigkeit und Steifigkeit aus. Ebenso führt ein fortschreitender Verschleiß der Bremse, also der Abtrag der Bremsbeläge, zu einer Änderung der Steifigkeit, da die Steifigkeit der Bremsscheibe zumeist höher ist, als die des Bremsbelags. Folglich nimmt die die Steifigkeit mit abnehmender Belagsdicke zu. Der Bremsentyp und der Bremsenbelagstyp können darüber hinaus beispielsweise Informationen bezüglich der thermischen Beständigkeit, der der spezifischen Festigkeit und Steifigkeit sowie dem abrasiven Widerstand der Bremsbeläge aufweisen.

Vorzugsweise wird der Temperaturparameter als Funktion des Bewegungsprofils des Fahrzeugs bereitgestellt.

Die Bereitstellung eines Temperaturparameters als Funktion des Bewegungsprofils des Fahrzeugs ermöglicht den Verzicht auf einen Temperatursensor zur Überwachung der Bremse und senkt somit weiter den Kosten-und Wartungsaufwand der Bremse. Die Temperatur lässt sich erfindungsgemäß anhand des Bewegungsprofils des Fahrzeugs, welches z.B. die Anzahl der Verzögerungsvorgänge und die Geschwindigkeit umfasst, und weiterer, für die Bremse repräsentativer Kennwerte, wie z.B. des Bremsen- oder Bremsbelagstyps, berechnen.

Vorzugsweise wird der Verschleißparameter als Funktion eines Ausgangssignalwerts des Verschleißsensors, der repräsentativ für den unbetätigten Zustand der Bremse ist, und eines Ereignissignalwerts Verschleißsensors, der repräsentativ für den betätigten Zustand der Bremse ist, bereitgestellt.

Die Erfindung macht sich, wie vorstehend beschrieben, die Erkenntnis zunutze, dass der Verschleißsensor ein hochsensibles Messinstrument darstellt, welches über die reine Messung einer Betätigungsstrecke hinaus anhand des zeitlichen Signalverlaufs analysiert werden kann.

Erfindungsgemäß wird unter dem Ausgangssignalwert das Messsignalplateau des Verschleißsensors bei nicht betätigter Bremse verstanden. Dieser Wert verschiebt sich im Laufe der Zeit durch voranschreitenden Verschleiß der Bremsbeläge. Unter dem Ereignissignalwert wird erfindungsgemäß derjenige Signalwert verstanden, bei dem mit Sicherheit davon ausgegangen werden kann, dass der Bremsbelag und sein Gegenpart soweit miteinander in Kontakt gebracht worden sind, dass kein weiterer Leerhub stattfinden wird.

Gemäß einer vorteilhaften Ausführungsform sind die zustandsabhängigen Steifigkeitswerte als statistisch ermittelte Steifigkeit über dem Wegsignal der Bremse hinterlegt.

Somit werden Näherungswerte für Steifigkeitswerte für die Berechnung der Zuspannkraft bereitgestellt, welche in einfacher Weise statistisch über dem Wegsignal der Bremse ermittelt werden.

Gemäß einer weiteren vorteilhaften Ausführungsform sind die zustandsabhängigen Steifigkeitswerte als während der Produktion für die jeweilige Bremse durch Kraft-/Wegmessungen bei Raumtemperatur ermittelte Steifigkeit hinterlegt.

Vorzugsweise werden experimentell ermittelte Steifigkeitswerte bei Raumtemperatur für die Berechnung der Zuspannkraft bereitgestellt und der Temperatureinfluss auf die Steifigkeitswerte bei der Berechnung der Zuspannkraft über nichtlineare Zusammenhänge extrapoliert.

Gemäß einer vorteilhaften Weiterbildung der Erfindung umfasst das Verfahren die Verfahrensschritt:

- Bereitstellen eines vordefinierten Sollwerts der Zuspannkraft $F_{Soll}$ der Bremse,
- Vergleichen der Zuspannkraft $F_{Ist}$ mit der Zuspannkraft $F_{Soll}$, und
- Bereitstellen eines Ausgangssignals, welches die Abweichung zwischen $F_{Ist}$ und $F_{Soll}$ anzeigt, Bereitstellen eines Warnsignals, vorzugsweise an eine zentrale Steuereinheit, falls $F_{Ist}$ von $F_{Soll}$ abweicht, insbesondere wenn die Abweichung größer als ein erster vordefinierter Schwellwert ist.

Durch das Bereitstellen eines vordefinierten Sollwerts der Zuspannkraft und das Vergleichen der berechneten Zuspannkraft mit dem Sollwert wird zuverlässig eine ordnungsgemäße Funktionsweise der Bremse gewährleistet. Abweichungen der berechneten Zuspannkraft von dem Sollwert, unterhalb des ersten vordefinierten Schwellwerts, beeinträchtigen die Funktionsweise der Bremse nicht. Die Funktionsweise wird erst mit überschreiten des ersten vordefinierten Schwellwert durch eine zumeist zu geringe Zuspannkraft beeinträchtigt. Die Bereitstellung eines Warnsignals, vorzugsweise an die zentrale Steuereinheit, stellt eine Warnung für den Fahrer des Fahrzeugs bereit, so dass entsprechende Maßnahmen durch den Fahrer eingeleitet werden können. In analoger Weise kann die zentrale Steuerung nach Empfang des Warnsignals, beispielsweise durch ein CAN-Bussystem, auch direkt die entsprechenden Maßnahmen einleiten.

Ein solches CAN-Bussystem einer zentralen Steuerung des Fahrzeugs kann mit einigen oder sämtlichen verteilten Steuereinheiten, wie beispielsweise der Bremsensteuereinheit, des Fahrzeugs verbunden werden. Die Steuereinheit bzw. Steuereinheiten, wie die Bremssteuereinheit umfasst bzw. umfassen vorzugsweise mehrere Steuergeräte. Die Ausgangssignale der Steuereinheiten und jene des Steuergeräts können mittels eines CAN-Bus an die zentrale Steuerung übertragen werden.

Die Erfindung bezieht sich ebenso auf die Übertragung von Ein- und Ausgangssignalen in einem Fahrzeug mittels einer festen Datenverbindung.

Das Warnsignal kann vorzugsweise in Form eines charakteristischen Datensignals mit einem vorbestimmten Code, als akustisches oder optisches Warnsignal oder als Kombination mehrerer oder sämtlicher Signalformen bereitgestellt werden.

Die Erfindung löst die zugrundeliegende Aufgabe in einem zweiten Aspekt durch ein Verfahren zum automatischen Nachstellen des Aktuatorwegs einer Bremse eines Kraftfahrzeugs, insbesondere eines Nutzkraftfahrzeugs, weitergebildet, umfassend ein Verfahren zur Überwachung einer Bremse eines Kraftfahrzeugs der vorstehend beschriebenen Art, und weiter umfassend:

- Bereitstellen eines vordefinierten Sollwerts der Zuspannkraft $F_{Soll}$ der Bremse, Vergleichen der Zuspannkraft $F_{Ist}$ mit der Zuspannkraft $F_{Soll}$,

- Bereitstellen Korrekturwertes als Differenz zwischen $F_{Ist}$ und $F_{Soll}$ zum Nachstellen des Aktuatorwegs an einer Output-Schnittstelle, falls die Abweichung größer als ein zweiter vordefinierter Schwellwert ist.

Es ist in diesem Aspekt erfindungsgemäß vorgesehen, dass bei Abweichungen der berechneten Zuspannkraft von dem Sollwert der Zuspannkraft, welche oberhalb des zweiten vordefinierten Schwellwerts liegen, unmittelbar ein Korrekturwert abgeleitet werden kann, mittels dessen eine Gegenmaßnahme eingeleitet werden kann. Der Aktuatorweg, wird somit beispielsweise durch eine Nachstelleinheit am Aktuator nachgestellt und die Abweichung der Zuspannkraft ausgeglichen, sodass die Funktionsweise der Bremse ist weiterhin gewährleistet ist.

Der Aktuatorweg ist dabei ein Betätigungsweg des Aktuators, beispielsweise in Form eines Stößels oder ein Drehwinkel des Aktuators, beispielsweise in Form einer Kurvenscheibe.

Die Erfindung löst die zugrundeliegende Aufgabe in einem weiteren Aspekt durch ein Verfahren zum automatischen Nachstellen des Lüftspiels einer Bremse eines Kraftfahrzeugs, insbesondere eines Nutzkraftfahrzeugs, umfassend ein Verfahren nach einer der vorstehend beschriebenen bevorzugten Ausführungsformen zur Überwachung einer Bremse eines Kraftfahrzeugs, und weiter umfassend:

- Bereitstellen eines vordefinierten Sollwerts der Zuspannkraft $F_{Soll}$ der Bremse, Vergleichen der Zuspannkraft $F_{Ist}$ mit der Zuspannkraft $F_{soll}$,
- Bereitstellen eines Korrekturwertes als Differenz zwischen $F_{Ist}$ und $F_{Soll}$ zum Nachstellen des Lüftspiels an einer Output-Schnittstelle, falls die Abweichung größer als ein dritter vordefinierter Schwellwert ist.

Es ist auch hier vorgesehen, dass bei Abweichungen der berechneten Zuspannkraft von dem Sollwert der Zuspannkraft, welche oberhalb des dritten vordefinierten Schwellwerts liegen, unmittelbar ein Korrekturwert abgeleitet werden kann, mittels dessen eine Gegenmaßnahme eingeleitet werden kann. Der dritte Schwellwert liegt dabei oberhalb des zweiten Schwellwertes, sodass eine geeignete Gegenmaßnahme zur Kompensation nicht länger allein über das Nachstellen des Aktuatorwegs erfolgen kann. Folglich wird erfindungsgemäß ein Korrekturwert zum nachstellen des Lüftspiels bereitgestellt, welches auch bei vergleichsweise hohen Abweichungen der berechneten Zuspannkraft von dem Sollwert eine zuverlässige Gegenmaßnahme durch Nachstellen des Lüftspiels darstellt.

Der Sollwert kann beispielsweise über die Betätigungskraft, welche in einem begrenzten Arbeitsbereich mittels der Übersetzung in die Zuspannkraft umgerechnet werden kann, bereitgestellt werden. Die Betätigungskraft kann in analoger Weise zu der Zuspannkraft durch einen Kraftsensor gemessen oder durch ein Verfahren der vorstehend beschriebenen Art berechnet werden.

Erfindungsgemäß sind somit drei Schwellwerte vorgesehen. Ein erster Schwellwert, unterhalb dessen zulässige Abweichungen der berechneten Zuspannkraft von dem Sollwert liegen, ein zweiter Schwellwert unterhalb dessen Abweichungen der berechneten Zuspannkraft von dem Sollwert der Zuspannkraft liegen, welche durch Nachstellen des Aktuatorwegs ausgeglichen werden können und ein dritten Schwellwert unterhalb dessen Abweichung der berechneten Zuspannkraft von dem Sollwert der Zuspannkraft liegen, welche nur durch Nachstellen des Lüftspiels ausgeglichen werden können.

Das Bereitstellen des Korrekturwertes zum Nachstellen des Aktuatorwegs sowie das Bereitstellen des Korrekturwertes zum Nachstellen des Lüftspiels erfolgt vorzugsweise, sobald die Abweichung den zweiten bzw. dritten Schwellwert überschreitet, und/oder sobald der ermittelte Korrekturwert innerhalb eines vorbestimmten Toleranzbandes ein- oder mehrmals in sukzessiven Messungen bestätigt wird. Die Vorschrift, einen Korrekturwert nicht nur einmalig bestimmen zu können, sondern diesen mehrmals wiederholt ermitteln zu müssen, stellt sicher, dass an der Datenschnittstelle keine unsinnigen, "false positive" Korrekturwerte ausgegeben werden, sondern erst dann ein Korrekturwert bereitgestellt wird, wenn tatsächlich eine Abweichung der berechneten Zuspannkraft von dem Sollwert auftritt.

Vorzugsweise umfasst das Verfahren nach einem der vorstehenden Aspekte ferner die Verfahrensschritt:

- Nachstellen des Aktuatorwegs um den ermittelten Korrekturwert, wenn der zweite Schwellwert überschritten wird, und
- Nachstellen des Lüftspiels um den ermittelten Korrekturwert, wenn der dritte Schwellwert überschritten wird.

Somit wird bei einem Verfahren der eingangs genannten Art automatisch eine geeignete Maßnahme zur Korrektur der Abweichung der berechneten Zuspannkraft von dem Sollwert der Zuspannkraft eingeleitet.

Die Erfindung löst die zugrundeliegende Aufgabe in einem weiteren Aspekt durch ein Steuergerät zur Überwachung einer Bremse eines Kraftfahrzeugs, insbesondere eines Nutzkraftfahrzeugs, mit einer Input-Schnittstelle zur signalleitenden Verbindung des Steuergeräts mit einem Verschleißsensor, der dazu eingerichtet ist, Wegsignale der Bremse bereitzustellen, einem Datenspeicher, in dem ein Computerprogramm zur Durchführung des Verfahrens nach einem der vorstehenden Ansprüche hinterlegt ist, und einem Prozessor zum Berechnen einer Ausgangsgröße, wobei das Steuergerät dazu eingerichtet ist, einen, mehrere oder sämtliche der Verfahrensschritte des Verfahrens nach einem der vorstehenden Ansprüche auszuführen.

Vorzugsweise ist die Output-Schnittstelle dazu eingerichtet ist, eines, mehrere oder sämtliche der folgenden als Ausgangssignal bereitzustellen:

- eine gemäß einem Verfahren der vorstehend beschriebenen Art berechnete Zuspannkraft,
- eine gemäß einem Verfahren der vorstehend beschriebenen Art berechnete Abweichung zwischen $F_{Ist}$ und $F_{Soll}$,
- ein gemäß einem Verfahren der vorstehend beschriebenen Art berechnetes Warnsignal,
- einen gemäß einem Verfahren der vorstehend beschriebenen Art berechneten Korrekturwert bereitzustellen.

Die Ausgangssignale können dabei direkt einer Vorrichtung zum Nachstellen, bzw. einer Nachstelleinheit des Aktuatorwegs oder des Lüftspiels, einer Steuereinheit der Bremse oder einer Steuereinheit der jeweiligen Achse der Bremse sowie der zentralen Steuerung des Fahrzeugs mittels einer festen Datenverbindung oder des CAN-Bus-Systems bereitgestellt werden.

Die Erfindung löst die zugrundeliegende Aufgabe in einem weiteren Aspekt durch ein Fahrzeugsystem, umfassend eine Bremse, ein Steuergerät zur Überwachung der Bremse, einen mit dem Steuergerät signalleitend verbundenen Verschleißsensor zur Bereitstellung von Wegsignalen der Bremse, wobei das Steuergerät gemäß einer der vorstehend beschriebenen bevorzugten Ausführungsformen ausgebildet ist.

Der Verschleißsensor kann dabei mit dem Steuergerät oder einer zentralen Steuerung des Fahrzeugs mittels einer festen Datenverbindung oder des CAN-Bus-Systems signalleitend verbunden sein.

Die erfindungsgemäßen Vorteile des eingangs beschriebenen Verfahrens gelten in gleicher Weise für das Steuergerät und das Fahrzeugsystem, und umgekehrt. Bevorzugte Ausführungsformen des erfindungsgemäßen Verfahrens sind zugleich bevorzugte Ausführungsformen des Steuergeräts und insbesondere des Computerprogramms, welches im Datenspeicher des Steuergeräts hinterlegt ist.

Ausführungsbeispiele der Erfindung werden nun nachfolgend anhand der Zeichnungen beschrieben. Diese sollen die Ausführungsbeispiele nicht notwendigerweise maßstäblich darstellen. Vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Weitere Vorteile, Merkmale und Einzelheiten der Erfindung ergeben sich aus der nachfolgenden Beschreibung der bevorzugten Ausführungsformen, sowie anhand der folgenden Figuren. Im Einzelnen zeigen:

Fig. 1 eine schematische Darstellung eines erfindungsgemäßen Fahrzeugsystems mit einem erfindungsgemäßen Steuergerät,

Fig. 2 eine schematische Darstellung des erfindungsgemäßen Verfahrens, und

Fig. 3 eine schematische Darstellung einer alternativen Ausführungsform des erfindungsgemäßen Verfahrens.

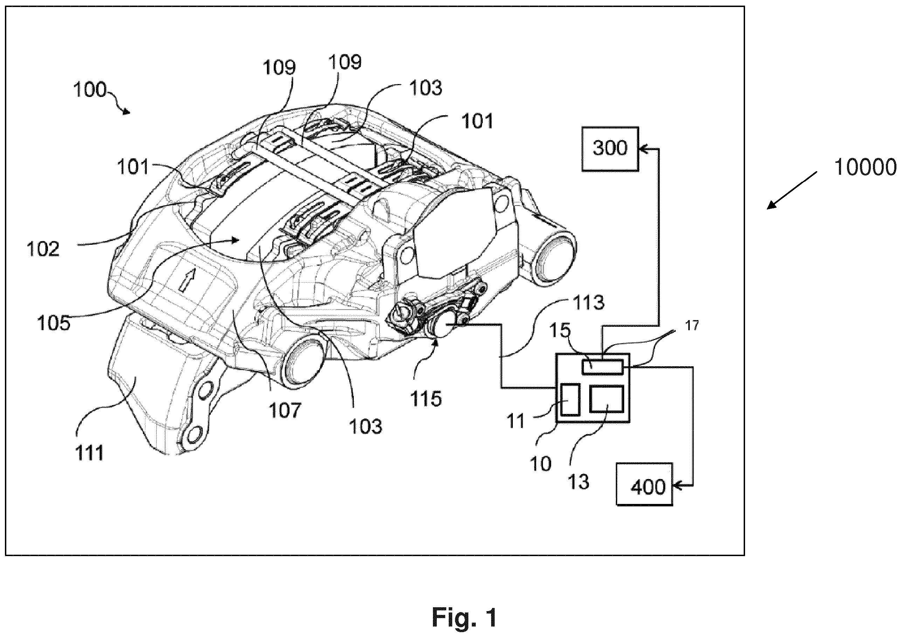

Gemäß Fig. 1 weist das erfindungsgemäße Fahrzeugsystem 10000 eine Bremse 100, welche in diesem Ausführungsbeispiel als Scheibenbremse ausgeführt ist, und welche für die Verwendung in einem Nutzkraftfahrzeug ausgebildet ist, eine Bremsscheibe 105 (angedeutet dargestellt) und zwei auf gegenüberliegenden Seiten der Bremsscheibe 105 angeordnete Bremsbeläge 103 auf, wobei die Bremsscheibe 105 und die Bremsbeläge 103 relativ zueinander bewegbar sind. Zumindest ein Bremsbelag 103 wird von einem Belagträger gehalten.

Die Scheibenbremse umfasst ferner einen Bremssattel 107, welcher axial auf Führungsbolzen eines Bremsenträgers 111 gleitet. Die Bremsbeläge 103 werden im Bremsenträger 111 axial verschiebbar geführt und abgestützt. Die Halterung der Bremsbeläge 103 erfolgt durch einen Niederhaltebügel 109 und durch Niederhaltefedern 101.

In dem Bremssattel 107 ist ein Verschleißsensor 115 angeordnet, der den Betätigungsweg eines Druckstempels (nicht gezeigt) misst, welcher auf die Bremsbeläge wirkt. Das Bezugszeichen 115 weist auf den ungefähren Montageort des Sensors in der Nähe des Rückstellers. Der Verschleißsensor 115 ist mittels einer signalleitenden Verbindung 113, die wahlweise kabellos oder kabelgebunden ausgebildet sein kann, mit einem Steuergerät 10 verbunden.

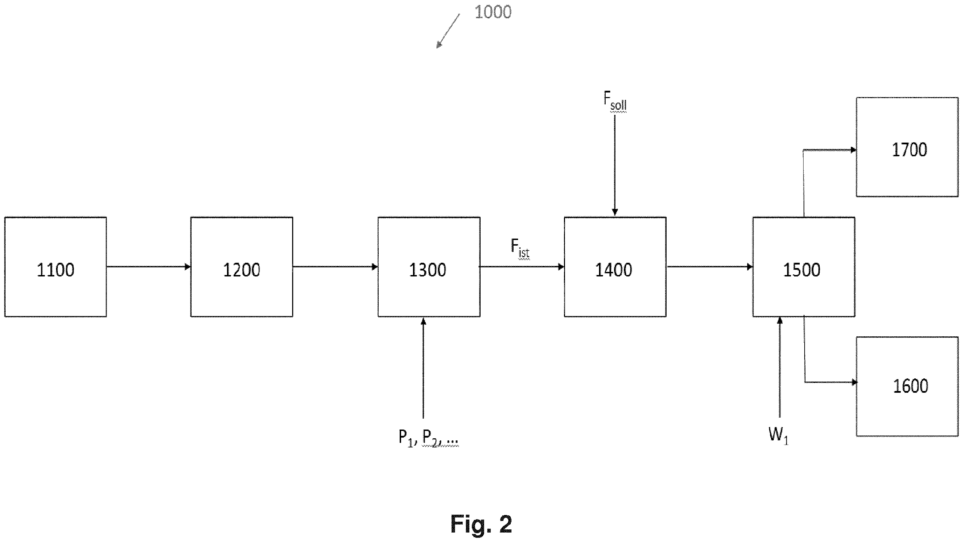

Das Steuergerät 10 weist einen Prozessor 11 auf, sowie einen Datenspeicher 13 und eine Input-Schnittstelle 15. Das Steuergerät 10 ist dazu eingerichtet, mittels eines auf dem Datenspeicher 13 hinterlegten Computerprogramms ein Verfahren 1000 auszuführen (Fig. 2).

Die mit dem Verfahren 1000 ermittelten Signalwerte, wie die Korrekturwerte und/oder Warnsignale gibt das Steuergerät 10 über eine Output-Schnittstelle 17 aus, beispielsweise an eine elektronische Nachstelleinheit der Bremse 300, insbesondere zum Nachstellen des Lüftspiels, oder an ein CAN-Bus-System 400 des Kraftfahrzeugs.

Fig. 2 zeigt schematisch einen Ablauf des erfindungsgemäßen Verfahrens 1000 gemäß einem bevorzugten Ausführungsbeispiel. Als angenommenen Verfahrensbeginn werden in Verfahrensschritt 1100 Wegsignale eines an der Bremse 100 angeordneten Verschleißsensors 115 ausgelesen, beispielsweise mittels des Steuergeräts 10.

In Verfahrensschritt 1200 wird ein der Bremse 100 zugeordnetes vordefiniertes Steifigkeitskennfeld, in dem zustandsabhängige Steifigkeitswerte C hinterlegt sind, bereitgestellt. Das Steifigkeitskennfeld wird vorzugsweise in dem Datenspeicher 13 des Steuergeräts 10 gespeichert. Die Steifigkeitswerte $C$ sind abhängig von dem Bewegungsprofil des Fahrzeugs, den Umgebungsbedingungen und dem Verschleißzustand der Bremse 100, so dass die Steifigkeitswerte C nicht als absolute Werte, sondern in Abhängigkeit verschiedener Parameter $P_1, P_1,$ ... usw. in dem Steifigkeitskennfeld hinterlegt sind. In dem Steifigkeitskennfeld sind die Steifigkeitswerte vorzugsweise in Abhängigkeit der Parameter: Temperatur, Verschleiß, Bremsentyp und Bremsbelagstyp hinterlegt. Die Parameter selbst können dabei als feste Werte oder als variable Werte in Form einer Funktion hinterlegt sein. Die Temperatur ist dabei vorzugsweise als Funktion des Bewegungsprofils des Fahrzeugs bereitgestellt, kann aber auch mittels eines Temperatursensors über dem Wegsignal des Verschleißsensors 115 bereitgestellt werden.

In Verfahrensschritt 1300 wird die Zuspannkraft $F_{ist}$ als Funktion der in Verfahrensschritt 1100 ausgelesenen Wegsignale und des in Verfahrensschritt 1200 vordefinierten Steifigkeitskennfeldes berechnet. Die Berechnung erfolgt vorzugsweise mittels des Prozessors des Steuergerätes 10. Die Berechnung der Zuspannkraft erfolgt dabei vorzugsweise mittels einer Funktion der Steifigkeitswerte C und der Wegsignale $S_1, S_2,$ ... usw.

$$F_{Ist} = C(P_1, P_2, P_3, ...) \cdot (S_2 - S_1)$$

In Verfahrensschritt 1400 wird ein vordefinierter Sollwert der Zuspannkraft $F_{Soll}$ der Bremse 100 bereitgestellt. Dabei wird der Bewegung- und Verschleißzustand der Bremse 100 berücksichtigt.

In Verfahrensschritt 1500 wird die berechnete Zuspannkraft $F_{ist}$ mit dem Sollwert der Zuspannkraft $F_{Soll}$ verglichen. Die Zuspannkraft $F_{ist}$ darf von der Zuspannkraft $F_{Soll}$ in einem gewissen Toleranzbereich abweichen, in welchem die Differenz zwischen $F_{ist}$ und $F_{Soll}$ kleiner als ein erster vordefinierter Schwellwert $W_1$ ist.

In Verfahrensschritt 1600 wird ein Ausgangssignal, welches die Abweichung zwischen $F_{ist}$ und $F_{Soll}$ anzeigt bereitgestellt. Die Höhe der Abweichung ist dabei maßgeblich dafür, ob und welche Gegenmaßnahmen eingeleitet werden, um weiterhin die ordnungsgemäße Funktionsweise der Bremse 100 zu gewährleisten.

In Verfahrensschritt 1700 wird ein Warnsignal bereitgestellt, falls die Abweichung zwischen $F_{ist}$ und $F_{Soll}$ größer als der erste vordefinierte Schwellwert ist. Das Warnsignal wird dabei bevorzugt einer zentralen Steuereinheit des Fahrzeugs bereitgestellt, damit dieses dem Fahrer angezeigt werden kann, bzw. die zentrale Steuereinheit, vorzugsweise mittels einer festen Datenverbindung oder eines CAN-Bus-Systems, Steuergeräte im Fahrzeug oder Aktuatoren ansteuern kann, um dieser Abweichung entgegenzuwirken.

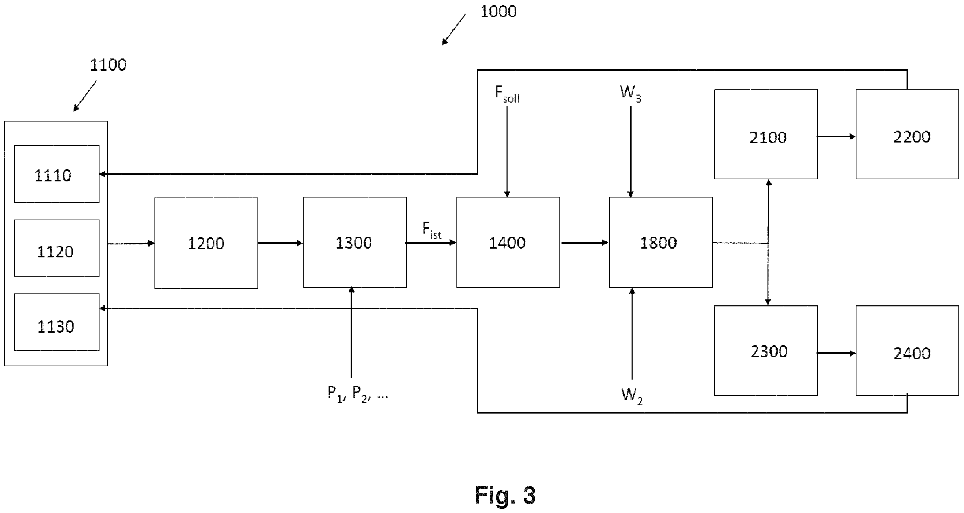

Figur 3 zeigt schematisch einen Ablauf einer weiteren bevorzugten Ausführungsform des erfindungsgemäßen Verfahrens 1000.

Der Verfahrensschritt 1100 des Auslesens umfasst ferner das Erfassen 1110 eines vordefinierten Lüftspiels, die Bestimmung 1120 des Hubs des Druckstempels auf die Bremsbeläge durch Auslesen der Wegsignale des Verschleißsensors 115 und die Bestimmung 1130 des Axialwegs des Stößels bzw. des Drehwinkels der Kurvenscheibe des Aktuators der Bremse 100 durch Auslesen der Wegsignale eines weiteren Sensors, beispielsweise eines Wegsensors bzw. Inkrementalgebers.

Auf den Verfahrensschritt des Auslesens der Wegsignale des Verschleißsensors 115 1100, den Verfahrensschritt des Bereitstellens eines Steifigkeitskennfeldes 1200 und des Berechnens der Zuspannkraft in Verfahrensschritt 1300 folgt in Verfahrensschritt 1400 das Bereitstellen des vordefinierten Sollwerts der Zuspannkraft $F_{Soll}$ der Bremse. Nachdem in Verfahrensschritt 1500 in bekannter Weise $F_{Ist}$ und $F_{Soll}$ verglichen wurden, folgt Verfahrensschritt 1800.

In Verfahrensschritt 1800 wird ein Korrekturwert als Differenz zwischen $F_{Ist}$ und $F_{Soll}$ bereitgestellt. Übersteigt die Differenz zwischen $F_{Ist}$ und $F_{Soll}$ einen zweiten Schwellwert $W_2$, folgt Schritt 2100.

In Verfahrensschritt 2100 wird der Korrekturwert zum Nachstellen des Aktuatorwegs an einer Output-Schnittstelle 17 bereitgestellt. Beispielsweise kann der bereitgestellte Korrekturwert, vorzugsweise mittels eines CAN-Bus-Systems, daraufhin einer Nachstelleinheit des Aktuators oder einer Bremsensteuereinheit bereitgestellt werden.

In Verfahrensschritt 2200 wird der Aktuatorweg nachgestellt. Das Nachstellen des Aktuatorwegs beeinflusst den in Verfahrensschritt 1130 bestimmten Axialweg des Stößels bzw. des Drehwinkels der Kurvenscheibe des Aktuators.

Übersteigt die Differenz zwischen $F_{Ist}$ und $F_{Soll}$ einen dritten Schwellwert $W_3$, folgt Verfahrensschritt 2300.

In Verfahrensschritt 2300 wird der Korrekturwert zum Nachstellen des Lüftspiels an einer Output-Schnittstelle 17 bereitgestellt. Der bereitgestellte Korrekturwert kann mittels einer festen Datenverbindung oder eines CAN-Bus-Systems beispielsweise einer automatischen Nachstelleinheit 300 der Bremse 100 zum Nachstellen des Lüftspiels oder einer Bremsensteuereinheit bereitgestellt werden.

In Verfahrensschritt 2400 wird das Lüftspiel beispielsweise mittels der automatischen Nachstelleinheit 300 der Bremse 100 oder auch manuell nachgestellt. Somit verändert sich der Wert des Lüftspiels gemäß Schritt 1110 und damit die berechnete Zuspannkraft.

Bezugszeichenliste

10          Steuergerät

| 11 | Prozessor |
|---|---|
| 13 | Datenspeicher |
| 15 | Input-Schnittstelle |
| 17 | Output-Schnittstelle |
| 100 | Bremse |
| 101 | Niederhaltefeder |
| 103 | Bremsbelag |
| 105 | Bremsscheibe |
| 107 | Bremssattel |
| 109 | Niederhaltebügel |
| 111 | Bremsenträger |
| 113 | signalleitende Verbindung |
| 115 | Verschleißsensor |
| 300 | Nachstelleinheit |
| 400 | Bus-System |
| 1000 | Verfahren |
| 1100-2400 | Verfahrensschritte |
| 10000 | Fahrzeugsystem |

## Patentansprüche

1. Verfahren (1000) zur Überwachung einer Bremse (100) eines Kraftfahrzeugs, insbesondere eines Nutzkraftfahrzeugs, umfassend die Verfahrensschritt:

   - Auslesen (1100) von Wegsignalen eines an der Bremse (100) angeordneten Verschleißsensors (115),
   - Bereitstellen (1200) eines der Bremse (100) zugeordneten vordefinierten Steifigkeitskennfeldes, in dem zustandsabhängige Steifigkeitswerte hinterlegt sind, und
   - Berechnen (1300) einer Zuspannkraft $F_{Ist}$ als Funktion der Wegsignale und des vordefinierten Steifigkeitskennfeldes.

2. Verfahren (1000) nach Anspruch 1, wobei die Zuspannkraft jeweils als Produkt eines der in dem Steifigkeitskennfeld hinterlegten Steifigkeitswerte und eines zugeordneten Wertes der Wegsignale bereitgestellt wird.

3. Verfahren (1000) nach Anspruch 1 oder 2, wobei die Steifigkeitswerte in Abhängigkeit mehrerer Zustandsparameter hinterlegt sind und die Parameter eines, mehrere oder sämtliche der folgenden umfassen:

   - Temperatur,
   - Verschleiß,
   - Bremsentyp,
   - Bremsenbelagstyp.

4. Verfahren (1000) nach Anspruch 3, wobei der Temperaturparameter als Funktion des Bewegungsprofils des Fahrzeugs bereitgestellt wird.

5. Verfahren (1000) nach Anspruch 3 oder 4, wobei der Verschleißparameter als Funktion eines Ausgangssignalwerts des Verschleißsensors (115), der repräsentativ für den unbetätigten Zustand der Bremse (100) ist, und eines Ereignissignalwerts Verschleißsensors (115), der repräsentativ für den betätigten Zustand der Bremse (100) ist, bereitgestellt wird.

6. Verfahren (1000) nach einem der vorstehenden Ansprüche, wobei die zustandsabhängigen Steifigkeitswerte als statistisch ermittelte Steifigkeit über dem Wegsignal der Bremse (100) hinterlegt sind.

7. Verfahren (1000) nach einem der Ansprüche 1 bis 6, wobei die zustandsabhängigen Steifigkeitswerte als während der Produktion für die jeweilige Bremse (100) durch Kraft-/Wegmessungen bei Raumtemperatur ermittelte Steifigkeit hinterlegt sind.

8. Verfahren (1000) nach einem der vorstehenden Ansprüche, ferner umfassend die Verfahrensschritt:

   - Bereitstellen (1400) eines vordefinierten Sollwerts der Zuspannkraft $F_{Soll}$ der Bremse,
   - Vergleichen (1500) der Zuspannkraft $F_{Ist}$ mit der Zuspannkraft $F_{Soll}$, und
   - Bereitstellen eines Ausgangssignals (1600), welches die Abweichung zwischen $F_{Ist}$ und $F_{Soll}$ anzeigt,
   - Bereitstellen eines Warnsignals (1700), vorzugsweise an eine zentrale Steuereinheit, falls $F_{Ist}$ von $F_{Soll}$ abweicht, insbesondere wenn die Abweichung größer als ein erster vordefinierter Schwellwert ist.

9. Verfahren (1000) zum automatischen Nachstellen des Aktuatorwegs einer Bremse (100) eines Kraftfahrzeugs, insbesondere eines Nutzkraftfahrzeugs, umfassend:

   - ein Verfahren (1000) nach einem der Ansprüche 1 bis 7, und weiter umfassend:

     - Bereitstellen (1400) eines vordefinierten Sollwerts der Zuspannkraft $F_{Soll}$ der Bremse,
     - Vergleichen (1500) der Zuspannkraft $F_{Ist}$ mit der Zuspannkraft $F_{soll}$,
     - Bereitstellen Korrekturwertes (2100) als Differenz zwischen $F_{Ist}$ und $F_{Soll}$ zum Nachstellen des Aktuatorwegs an einer Output-Schnittstelle (17), falls die Abweichung größer als ein zweiter vordefinierter Schwellwert ist.

**10.** Verfahren (1000) zum automatischen Nachstellen des Lüftspiels einer Bremse (100) eines Kraftfahrzeugs, insbesondere eines Nutzkraftfahrzeugs, umfassend:

- ein Verfahren (1000) nach einem der Ansprüche 1 bis 7, und weiter umfassend:

- Bereitstellen (1400) eines vordefinierten Sollwerts der Zuspannkraft $F_{Soll}$ der Bremse,
- Vergleichen (1500) der Zuspannkraft $F_{Ist}$ mit der Zuspannkraft $F_{soll}$,
- Bereitstellen Korrekturwertes (2300) als Differenz zwischen $F_{Ist}$ und $F_{Soll}$ zum Nachstellen des Lüftspiels an einer Output-Schnittstelle (17), falls die Abweichung größer als ein dritter vordefinierter Schwellwert ist.

**11.** Verfahren (1000) nach mindestens einem der Ansprüche 9 und 10, ferner umfassend die Verfahrensschritte:

- Nachstellen des Aktuatorwegs (2200) um den ermittelten Korrekturwert, wenn der zweite Schwellwert überschritten wird, und
- Nachstellen des Lüftspiels (2400) um den ermittelten Korrekturwert, wenn der dritte Schwellwert überschritten wird.

**12.** Steuergerät (10) zur Überwachung einer Bremse (100) eines Kraftfahrzeugs, insbesondere eines Nutzkraftfahrzeugs, mit

- einer Input-Schnittstelle (15) zur signalleitenden Verbindung des Steuergeräts (10) mit einem Verschleißsensor (115), der dazu eingerichtet ist, Wegsignale der Bremse (100) bereitzustellen,
- einem Datenspeicher (13), in dem ein Computerprogramm zur Durchführung des Verfahrens nach einem der vorstehenden Ansprüche hinterlegt ist, und
- einem Prozessor (11) zum Berechnen einer Ausgangsgröße,

wobei das Steuergerät (10) dazu eingerichtet ist, einen, mehrere oder sämtliche der Verfahrensschritte des Verfahrens nach einem der vorstehenden Ansprüche auszuführen.

**13.** Steuergerät (10) nach Anspruch 12, wobei die Output-Schnittstelle (17) dazu eingerichtet ist, eines, mehrere oder sämtliche der folgenden als Ausgangssignal bereitzustellen:

- eine gemäß einem Verfahren (1000) nach einem der Ansprüche 1 bis 8 berechnete Zuspannkraft,
- eine gemäß dem Verfahren (1000) nach Anspruch 9 berechnete Abweichung zwischen $F_{Ist}$ und $F_{Soll}$,

- ein gemäß dem Verfahren (1000) nach Anspruch 10 berechnetes Warnsignal,
- einen gemäß dem Verfahren (1000) nach Anspruch 10 berechneten Korrekturwert bereitzustellen.

**14.** Fahrzeugsystem (10000), umfassend

- eine Bremse (100),
- ein Steuergerät (10) zur Überwachung der Bremse (100),
- einen mit dem Steuergerät (10) signalleitend verbundenen Verschleißsensor (115) zur Bereitstellung von Wegsignalen der Bremse (100), wobei das Steuergerät (10) nach einem der Ansprüche 12 oder 13 ausgebildet ist.

**Claims**

**1.** Method (1000) for monitoring a brake (100) of a motor vehicle, in particular a commercial motor vehicle, comprising the method step of:

- reading out (1100) displacement signals from a wear sensor (115) arranged on the brake (100),
- providing (1200) a predefined stiffness characteristic map associated with the brake (100), in which state-dependent stiffness values are stored, and
- calculating (1300) an application force $F_{ist}$ as a function of the displacement signals and the predefined stiffness characteristic map.

**2.** Method (1000) according to claim 1, wherein the application force is provided in each case as a product of one of the stiffness values stored in the stiffness characteristic map, and an associated value of the displacement signals.

**3.** Method (1000) according to claim 1 or 2, wherein the stiffness values are stored on the basis of a plurality of state parameters and the parameters comprise one or more or all of the following:

- temperature,
- wear,
- brake type,
- brake lining type.

**4.** Method (1000) according to claim 3,

wherein the temperature parameter is provided as a function of the movement profile of the vehicle.

5. Method (1000) according to claim 3 or 4, wherein the wear parameter is provided as a function of an output signal value of the wear sensor (115) that is representative of the non-actuated state of the brake (100), and an event signal value wear sensor (115) that is representative of the actuated state of the brake (100).

6. Method (1000) according to any of the preceding claims, wherein the state-dependent stiffness values are stored as statistically determined stiffness over the displacement signal of the brake (100).

7. Method (1000) according to any of claims 1 to 6, wherein the state-dependent stiffness values are stored as stiffness determined during production for the relevant brake (100) by force/displacement measurements at room temperature.

8. Method (1000) according to any of the preceding claims, further comprising the method step of:

   - providing (1400) a predefined target value of the application force $F_{soll}$ of the brake,
   - comparing (1500) the application force $F_{ist}$ with the application force $F_{soll}$, and
   - providing an output signal (1600) indicating the deviation between $F_{ist}$ and $F_{soll}$, providing a warning signal (1700), preferably to a central control unit, if $F_{ist}$ deviates from $F_{soll}$, in particular if the deviation is greater than a first predefined threshold value.

9. Method (1000) for automatically adjusting the actuator displacement of a brake (100) of a motor vehicle, in particular a commercial motor vehicle, comprising:

   - a method (1000) according to any of claims 1 to 7, and further comprising:
   - providing (1400) a predefined target value of the application force $F_{soll}$ of the brake,
   - comparing (1500) the application force Fist with the application force $F_{soll}$,
   - providing correction value (2100) as a difference between $F_{ist}$ and $F_{soll}$ to adjust the actuator displacement at an output interface (17) if the deviation is greater than a second predefined threshold value.

10. Method (1000) for automatically adjusting the clearance of a brake (100) of a motor vehicle, in particular a commercial motor vehicle, comprising:

   - a method (1000) according to any of claims 1 to 7, and further comprising:
   - providing (1400) a predefined target value of the application force $F_{soll}$ of the brake,
   - comparing (1500) the application force Fist with the application force $F_{soll}$,
   - providing correction value (2300) as a difference between $F_{ist}$ and $F_{soll}$ to adjust the clearance at an output interface (17) if the deviation is greater than a third predefined threshold value.

11. Method (1000) according to at least one of claims 9 and 10, further comprising the method steps of:

   - adjusting the actuator displacement (2200) by the determined correction value when the second threshold value is exceeded, and
   - adjusting the clearance (2400) by the determined correction value when the third threshold value is exceeded.

12. Control device (10) for monitoring a brake (100) of a motor vehicle, in particular a commercial motor vehicle, comprising

   - an input interface (15) for the signal-conducting connection of the control device (10) to a wear sensor (115) which is designed to provide displacement signals of the brake (100),
   - a data memory (13) in which a computer program for carrying out the method according to any of the preceding claims is stored, and
   - a processor (11) for calculating an output variable, wherein the control device (10) is designed to carry out one or more or all of the method steps of the method according to any of the preceding claims.

13. Control device (10) according to claim 12, wherein the output interface (17) is designed to provide one or more or all of the following as an output signal:

   - an application force calculated according to a method (1000) according to any of claims 1 to 8,
   - a deviation between $F_{ist}$ and $F_{soll}$, calculated according to the method (1000) according to claim 9,
   - a warning signal calculated according to the method (1000) according to claim 10,
   - provide a correction value calculated according to the method (1000) according to claim 10.

14. Vehicle system (10000), comprising

   - a brake (100),
   - a control device (10) for monitoring the brake (100),
- a wear sensor (115) which is connected to the control device (10) in a signal-conducting manner for providing displacement signals of the brake (100), wherein the control device (10) is designed according to either of claims 12 or 13.

**Revendications**

1. Procédé (1000) permettant la surveillance d'un frein (100) d'un véhicule automobile, en particulier d'un véhicule utilitaire, comprenant l'étape de procédé de :

   - lecture (1100) de signaux de déplacement d'un capteur d'usure (115) disposé sur le frein (100),
   - fourniture (1200) d'un champ caractéristique de rigidité prédéfini associé au frein (100) et dans lequel des valeurs de rigidité dépendant de l'état sont enregistrées, et
   - calcul (1300) d'une force de serrage $F_{Ist}$ en fonction des signaux de déplacement et du champ caractéristique de rigidité prédéfini.

2. Procédé (1000) selon la revendication 1, dans lequel la force de serrage est respectivement fournie en tant que produit d'une des valeurs de rigidité enregistrées dans le champ caractéristique de rigidité et d'une valeur associée des signaux de déplacement.

3. Procédé (1000) selon la revendication 1 ou 2, dans lequel les valeurs de rigidité sont enregistrées en fonction de plusieurs paramètres d'état et les paramètres comprennent un, plusieurs ou tous les paramètres suivants :

   - température,
   - usure,
   - type de frein,
   - type de garniture de frein.

4. Procédé (1000) selon la revendication 3, dans lequel le paramètre de température est fourni en fonction du profil de mouvement du véhicule.

5. Procédé (1000) selon la revendication 3 ou 4, dans lequel le paramètre d'usure est fourni en fonction d'une valeur de signal de sortie du capteur d'usure (115) représentant l'état non actionné du frein (100) et d'une valeur de signal d'événement capteur d'usure (115) représentant l'état actionné du frein (100).

6. Procédé (1000) selon l'une des revendications précédentes, dans lequel les valeurs de rigidité dépendant de l'état sont enregistrées en tant que rigidité déterminée statistiquement par l'intermédiaire du signal de déplacement du frein (100).

7. Procédé (1000) selon l'une des revendications 1 à 6, dans lequel les valeurs de rigidité dépendant de l'état sont enregistrées en tant que rigidité déterminée pendant la production pour le frein (100) respectif par des mesures de force/de déplacement à température ambiante.

8. Procédé (1000) selon l'une des revendications précédentes, comprenant en outre l'étape de procédé de :

   - fourniture (1400) d'une valeur de consigne prédéfinie de la force de serrage $F_{Soll}$ du frein,
   - comparaison (1500) de la force de serrage $F_{Ist}$ avec la force de serrage $F_{Soll}$, et
   - fourniture d'un signal de sortie (1600) indiquant l'écart entre $F_{Ist}$ et $F_{Soll}$,
   - fourniture d'un signal d'avertissement (1700), de préférence à une unité de commande centrale, si $F_{Ist}$ s'écarte de $F_{Soll}$, en particulier si l'écart est supérieur à une première valeur seuil prédéfinie.

9. Procédé (1000) permettant de régler automatiquement la course d'actionneur d'un frein (100) d'un véhicule automobile, en particulier d'un véhicule utilitaire, comprenant :

   - un procédé (1000) selon l'une des revendications 1 à 7, et comprenant en outre :
   - la fourniture (1400) d'une valeur de consigne prédéfinie de la force de serrage $F_{Soll}$ du frein,
   - la comparaison (1500) de la force de serrage $F_{Ist}$ avec la force de serrage $F_{Soll}$,
   - la fourniture valeur de correction (2100) en tant que différence entre $F_{Ist}$ et $F_{Soll}$ pour le réglage de la course d'actionneur au niveau d'une interface de sortie (17) si l'écart est supérieur à une deuxième valeur seuil prédéfinie.

10. Procédé (1000) permettant de régler automatiquement le jeu d'un frein (100) d'un véhicule automobile, en particulier d'un véhicule utilitaire, comprenant :

   - un procédé (1000) selon l'une des revendications 1 à 7, et comprenant en outre :
   - la fourniture (1400) d'une valeur de consigne prédéfinie de la force de serrage $F_{Soll}$ du frein,
   - la comparaison (1500) de la force de serrage $F_{Ist}$ avec la force de serrage $F_{Soll}$,
   - la fourniture valeur de correction (2300) en tant que différence entre $F_{Ist}$ et $F_{Soll}$ pour le réglage du jeu au niveau d'une interface de sortie (17) si l'écart est supérieur à une troisième valeur seuil prédéfinie.

11. Procédé (1000) selon au moins l'une des revendications 9 et 10, comprenant en outre les étapes de procédé de :

- réglage de la course d'actionneur (2200) au niveau de la valeur de correction déterminée lorsque la deuxième valeur seuil est dépassée, et
- réglage du jeu (2400) au niveau de la valeur de correction déterminée lorsque la troisième valeur seuil est dépassée.

12. Appareil de commande (10) permettant la surveillance d'un frein (100) d'un véhicule automobile, en particulier d'un véhicule utilitaire, comportant

- une interface d'entrée (15) pour la connexion de manière à conduire des signaux de l'appareil de commande (10) avec un capteur d'usure (115) configuré pour fournir des signaux de déplacement du frein (100),
- une mémoire de données (13) dans laquelle est enregistré un programme informatique pour la mise en oeuvre du procédé selon l'une des revendications précédentes, et
- un processeur (11) permettant le calcul d'une grandeur de sortie, l'appareil de commande (10) étant configuré pour exécuter une, plusieurs ou toutes les étapes de procédé du procédé selon l'une des revendications précédentes.

13. Appareil de commande (10) selon la revendication 12,
dans lequel l'interface de sortie (17) est configurée pour fournir un, plusieurs ou tous les éléments suivants en tant que signal de sortie :

- une force de serrage calculée suivant un procédé (1000) selon l'une des revendications 1 à 8,
- un écart entre $F_{Ist}$ et $F_{Soll}$ calculé suivant le procédé (1000) selon la revendication 9,
- un signal d'avertissement calculé suivant le procédé (1000) selon la revendication 10,
- pour fournir une valeur de correction calculée suivant le procédé (1000) selon la revendication 10.

14. Système de véhicule (10000), comprenant

- un frein (100),
- un appareil de commande (10) permettant la surveillance du frein (100),
- un capteur d'usure (115) connecté de manière à conduire des signaux à l'appareil de commande (10) pour la fourniture de signaux de déplacement du frein (100), l'appareil de commande (10) étant réalisé selon l'une des revendications 12 ou 13.

**Fig. 1**

EP 3 611 397 B1

**Fig. 2**

**Fig. 3**

EP 3 611 397 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011246039 A1